# EUROPEAN PATENT APPLICATION

(11) **EP 1 925 849 A1**
(43) Date of publication of application: **28.05.2008**
(21) Application number: 07386024.9
(22) Date of filing: 07.11.2007
(51) Int. Cl.: F16H 3/76

(54) **Car's steering system, with planetary system of continuous transmission movement via cogwheels**

(30) Priority: 27.11.2006 GR 20060100642
(71) Applicant: Mastrokalos, Antonis, 84003 Sifnos (GR)
(72) Inventor: Mastrokalos, Antonis, 84003 Sifnos (GR)

(57) **Abstract**

The present invention refers to cars steering system that make use of planetary disks (13) of parabolic shape that has infinity place of relation, for the continuous transmission of movement via cogwheels. The relation change or speed of correspondence of steering system is carried out with the deviation or change of angle of rotation of planets from the middle vertical line. For the transmission of movement becomes use either of reversible electromotor (15), or hydraulic oscillator, or hydraulic cylinders of double acting energy (9). The command of motive provision is transported to the lever arm of relation control (23), which changes it in linear movement, and respectively via the angle change of axis of rotation of planets, causes the change of turns.

## Description

The invention regards in assistance layout of car's steering with planetary system of continuous transmission of movement, of infinity ratio, by use of cogwheels.

The planetary system has provision of elements at the axial significance of unit and no known radial.

Exist two or even three planets of parabolic shape, covered with cogwheel which the type of gears can be of straight or hypoid shape, they are fixed radically in the housing or body and to the centre in free rotation shaft and are turned round their axis, with possibility of angle alteration of this axis. The planets gears are in permanent contact with some selected each time, proportionally command of control, diametric point of gearing of cogwheels of sun and ring gears. Noteworthy that the shape named here ring is not ring, that surrounds the planets, but a disk, as precisely he is also the sun gear, with concave form equivalent of the one that they have the bodies of parabolic planets.

It works or as multiplier of relation or as reducer. The breadth of relations does not have restrictive factors, depended from the geometry dimensions that we desire for it's manufacture, simply can be predetermined proportionally by individual requirements each time.

This is interfered between the steering wheel and toothed ruler, or any other system can be elected as carrier of command in the bars of steering control, and it is been able to intervene in the each conditions of driving control, either independently from the driver's desire and proportionally from travel conditions, that are controlled by sensors of steering central unit, as accretion, speed of vehicle, side slip, blasts of sides of winds based on selected automatic program of unit, or as pre selected models of behaviour, available from the unit with possibility of choice from the driver and depended from the above conditions, as well as other factors, that are taken into consideration, so that the speed of system correspondence to be the proper.

Further details and advantages of the invention, are explained with the help of the attached drawings.

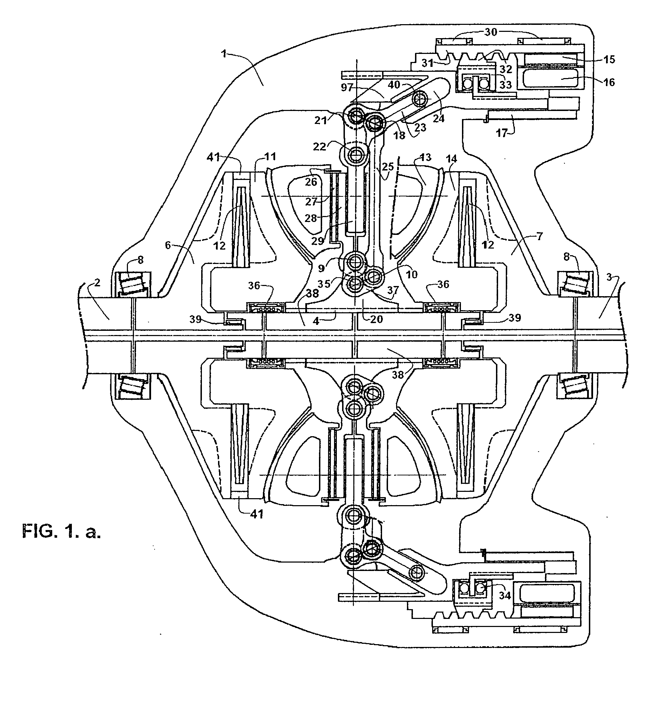

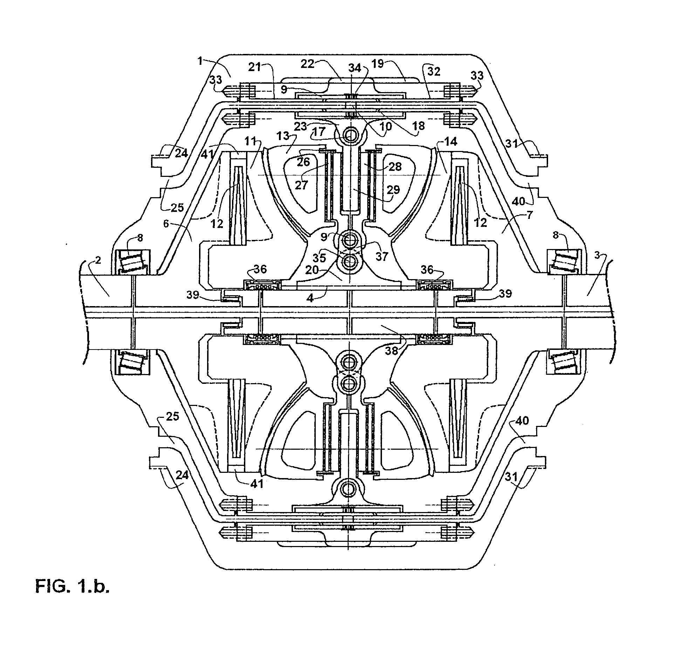

Figure 1.a presents in sides aspect a car steering system with planetary system of continuous transmission of movement via cogwheels, continuously checked transmission of movement with the help of one electromotor and its servomechanism. The signals of commands of correspondence or change of speed of movement of shaft of wheel, via the unit to the toothed ruler, emanate from central unit of steering system, via sensors of accretion, speed of vehicle, blasts of sides of winds or from combinations. The commands are executed from one electromotor adapted on the region of body or unit and they are transported to implementation by a cylinder that is blamed on electromotor rotor, with shaped his internal circumference in trapezoid thread, which is involved with corresponding thread found in drum which brings the driving forks or hairpins, that with assistance of lever arms or bars, achieve to cause angle divergence of planets from their medium vertical place to the one or the other side that are found the cogwheels of disks of wheel and toothed ruler, and thus it changes the diametric point of engagement or junction of planets gears and disk of wheel and toothed ruler, with result different transmission of turns from the axis of wheel to this toothed ruler with final achievement of expected results from such kind of system. The disks of cogwheels of wheel and toothed ruler are two items with insert of conical springs for confrontation of thermo systolic - diastolic and minimizing of any chance tolerances that can be caused from violent fluctuations of alternations or load.

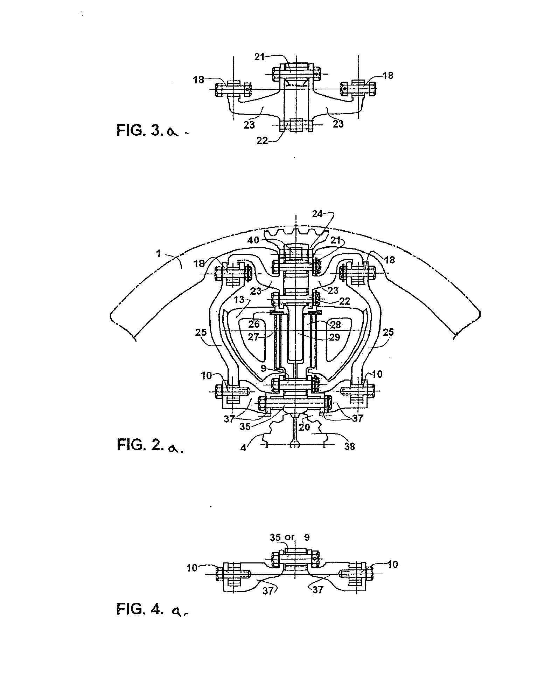

Figure 2.a. shows in partial view, part of housing and the shape that have the lever arms and binding bars, as well as the points of articulations with pins, and the way that these are connected from each other, aiming at the unhindered and unencumbered operation of unit.
Figure 3.a. presents in ground plan the control lever arm of relation, that changes the received command, from the electromotor and fork in linear movement and via angle change of axis of rotation of planets, causes the change of turns. He is found and is adapted to the circumference of housing.
Figure 4.a respectively reveals the shape that has the centre lever arm in ground plan. This in combination with the circumference and the binding bars, via the shaped table, achieve with the help of coaxial and slip shafts of the planets, the angle change of axis of last ones, for change of rotary speed or response of disks of wheel shaft and toothed ruler.

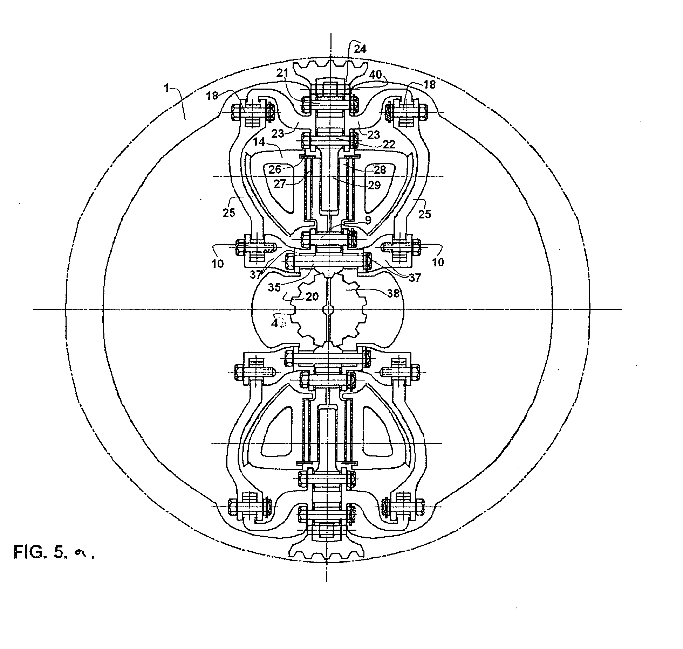

Figure 5.a exposes in general view the housing with the lever arms and binding bars, as pre described and in the previous drawings, also reveals the complete bulk shape of its body, as well as the spline shaft sector of connexion of central department of these with the intermediary free rotation shaft, that simply plays role of its fixing.
Figure 1.b exposes in sides aspect, the structure of other system of hydraulic control, car steering system with planetary system of continuous transmission of movement via cogwheels, rather simplified form. Its difference with the precedent, lies in the type of actuator of change of relation and only, which is a hydraulic cylinder of double acting energy, both side seated, which they are moved no piston rod, but the body of, which in one side is connected with the inner shaft by coaxial and slip between each other shafts, and from the other has shaped oblong ending, which is moved inside notch, engraved inside the body of housing, aiming at the avoidance of twist on its axis. As for the rest, it is same with the previous provision.
Figure 2.b show in partial front view, part of housing and the shape that have the lever arms, the hydraulic cylinder, as well as the points of articulations with pins, and the oblong groove on the body's housing, inside which is slip the upper part of hydraulic cylinder for the angle shift of planets rotation axis, to change relation rate.

### Detailed description of figures of the invention.

### Figure 1.a.

It presents in general sides view the structure and way of operation, of provision of car steering system with planetary system of continuous transmission of movement via cogwheels. Here (1) is the body or housing of unit. The (2) constitutes ending of wheel shaft, or entry in the unit through the semi piece or disk (6), which via conical springs (12) and the radial type of grooves (41) is connected with the disk of sun gear, let say (11). In the surface of disk and in different selected diameter each time, come in contact with the gears of cogwheel of planets (13). The planets at the same way come in contact with the opposite found side of output disk (14), which again via conical springs (12) and radial grooves (42) is connected with the other semi piece of output disk (7) with conclusion to the toothed ruler, or any other selected system that leads to the directorial wheels. The mechanism of receipt and implementation of commands or regulation of parameters, from the central unit of steering, leads in rotor (15), of the electromotor (15). Adapted in the rotor of motor is a cylinder with internal thread (31), that is found in permanent contact with the thread of modifier (32), which is fixed in carrier (33), of the thrust type bearing (34). This carrier, is fixed with the element (24) which has fork or hairpin, in a region and shape of swallows-nest in the other (42). This swallows-nest has also an additional tail or extension (97), which undertakes reinforcing role, for reduction of probabilities of tolerances and output with precision of commands. The cylinder (31) changes the rotary movement of the electromotor, in linear, via the adapted elements (32, 33) which sweep along the fork either left or right, from the medium vertical place. This transport has as result, via the fork (24) and his contact with the pin (40), who belongs in the lever arm (23), and which is fixed on housing (1) with the pin (21), the creation of torque couple. This torque couple is the way for the at arc shift of point the pin (22). This pin as point of fixing of intermediate shaft (29) of the double slip shafts of planets (13), in collaboration with the other exterior shaft (28) of the planets and in combination with the connexion of the lever arm (37), which connects his other utmost of planet with exterior shaft (28) and its pin (9) of the extreme pin (35), which connects them with the element (20) which constitutes the central point of fixing of planets shaft, and via binding bars (25), changes finally the signal and command in angle change of place of axis of planets. As result, it is the entanglement in other of either side of axis of planets, diametric points of cogwheels, from the medium vertical place that is presented in the form, with result the faster or slower correspondence of steering system, proportionally by the selected program. The (4) is spline shaft connexion of central ring of fixing of shafts (20) of the central lever arms of planets, that intends with conical springs (12) in the standardisation of axial tolerances and is fixed on the shaft (38) which is of rotation free and does not receive or transport movement, this is connected at the right - left with the input - output shafts via anti bending rings (39). The carrier of forks is seated on the housing via antifriction ring (17). The above provision can be served not only with electromotor, but also with hydraulic oscillator.

### Figure 2.a.

It presents in partial front view, part of housing (1) and the shape that have the lever arms (23, 27) and binding bars (25), as well as the points of articulations with pins, and the way that these are connected from each other, aiming at the unhindered and unencumbered operation of unit.

### Figure 3.a.

It presents in ground plan the lever arm control of relation (23), that changes the received command, from the electromotor and fork in linear movement and via angle change of axis of rotation of planets, causes the change of turns. It is found and adapted to the region of housing.

### Figure 4.a.

It reveals the shape that has the centre lever arm (37) in ground plan. This in combination with the circumference one (23) and binding bars (25), via the shaped table, they achieve with the help also of coaxial and slip between them planets shafts (28, 29), the angle change of axis of last ones, for change of rotary speed or respond of disks (14, 7) of the axis the toothed ruler (3).

### Figure 5.a.

It exposes in general front view the housing (1), with the lever arms (23, 37) and binding bars (25), as pre-described in the previous drawings, it also reveals the completely bulk shape of the body of spline shaft sector of connexion of central department of these (20), via the spline shaft (4), with the intermediary of rotation free shaft (38), that bears role of simply central fixing of system of the planets with their appurtenances.

This system finds also application as simple box of continuous transmission of movement with gear planets.

### Figure 1.b.

It presents another provision of a car steering system with planetary system of continuous transmission of movement via cogwheels, but with hydraulic cylinders of relation control of correspondence of unit. Here is explained only the way of operation of control system, because all the other elements at nomenclature and way of operation do not differ. Thus therefore in both sides, on the conical face of housing of unit (1), exist also openings of oil control inlet or returns (25, 40), proportionally to the commands of central unit of control. The oil cylinder proceeds up to these openings with pipes threaded in the threads (24, 31). Thence it is led via channels, to the spaces of hydraulic cylinder (9), via the flanges openings which are fixed on the internal surface of housing with screws (33). Via the pipe shaped piston rod (18) which are isolated from each other with diaphragm (10) but have apertures (18), they lead finally inside the interior of cylinder. Thus if due to command the oil is led to the cylinder because the rods are fixed - irremovable, the oil that will pass via the apertures (18) forces the free movement body of cylinder (9) to move to the same side whence enters the oil, while simultaneously the other region coming empty. With this transport of cylinder body and because in middle, at the significance of length of point exists the ledge with pin connexion of system of the planets shaft, the axis of planets leaves from intermediate vertical as it appears in the figure, so that changes the relation, because of different diameter of junction of gears of planets cogwheels at both sides disks. For avoidance of deviation from the smooth linear locomotion, opposite from the point of connexion of cylinders with the planets, exists a ledge - tail (22), which slips inside suitable groove or slot on the body of housing (19). In the drawing do not appear for reasons of its simplification, the pipes and remaining elements that lead the oil from and to servo valves and the oil pump.

### Figure 2.b.

It shows in partial front view, part of housing (1), and the shape which have the lever arms (37, 23), the hydraulic cylinder (34), as well as the points of articulations with the pins (17, 9, and 35), also is revealed and across the form of the oblong groove (19) on the body of the housing (1), inside which slips the upper part of hydraulic cylinder tail (22) in order to lock from opposite turning, for the angle shift of planets axis rotation, for change of rotation ratio. It also reveals the shape of the body of spline shaft sector of connexion of central department of these (20), via the spline connector (4), with the intermediary shaft (38) of free rotation, that bears role of simply central fixing of system of their planets with appurtenances.

Both of previous provisions apart from their use for provision of cars steering system, are capable to serve also needs of simple gear box with abilities of continuous altered relation of transmission of movement.

## Claims

1. Car steering system with planetary system of continuous transmission of movement via cogwheels, **characterised** from the existence of system of continuous transmission of movement, which offer infinity speed ratio and transmits the movement of one electromotor (15) and its servomechanism, via cogwheels.

2. Car steering system with planetary system of continuous transmission of movement via cogwheels, according to claim 1, **characterised** from the fact that the provision of planetary system is axial and no radical as it is known until today.

3. Car steering system with planetary system of continuous transmission of movement via cogwheels, according to claim 1, **characterised** from the fact that the cogwheels of planets have gears of straight or hypoid shape and are fixed radically in housing circumference (1) or in the body, the gears are in permanent contact with some selected diametric point of gearing each time, depending on the command of control that can emanate or from the central unit of system of steering, or via sensors of accretion.

4. Car steering system with planetary system of continuous transmission of movement via cogwheels, according to claims 1-3, **characterised** from the fact that the transmission of movement becomes instead of electromotor (15), via hydraulic oscillator.

5. Car steering system with planetary system of continuous transmission of movement via cogwheels, according to claim 1, **characterised** from the fact that it uses lever arm for control of relation (23), which changes the received command, from the electromotor and hairpin in linear movement, and via angle change of axis of rotation of planets, causes the change of turns.

6. Car steering system with planetary system of continuous transmission of movement via cogwheels, according to claim 1, **characterised** from the fact that he is capable to serve also needs of simple gear box with abilities of continuous altered relation of transmission of movement.
